# EUROPEAN PATENT SPECIFICATION

(11) **EP 0 700 799 B1**
(45) Date of publication and mention of the grant of the patent: **17.11.1999**
(21) Application number: 95202457.8
(22) Date of filing: 11.09.1995
(51) Int. Cl.: B60D 1/52, B60D 1/06

(54) **Detachable towing bracket and method for manufacturing such a bracket**
Abnehmbare Anhängevorrichtung und Verfahren zur Herstellung dieser Vorrichtung
Dispositif d'attelage de remorque détachable et procédé de fabrication d'un tel dispositif

(30) Priority: 09.09.1994 NL 9401471; 13.06.1995 NL 1000550
(43) Date of publication of application: 13.03.1996
(73) Proprietor: SCAMBIA INDUSTRIAL DEVELOPMENTS AKTIENGESELLSCHAFT, 9494 Schaan (LI)
(72) Inventor: Van Strien, Adrianus Cornelis, B-3560 Lummen (BE); Som, Michiel Johannes Maria, NL-4931 RX Geertruidenberg (NL)
(74) Representative: Eder, Carl E.

(56) References cited:
- EP-A- 0 223 996
- EP-A- 0 467 195
- EP-A- 0 492 035
- EP-A- 0 593 983
- DE-U- 8 813 812
- NL-A- 7 705 201

## Description

The invention relates to a detachable towing bracket for a vehicle, whereby the bracket has a ball bar comprising a first coupling means which can be detachably connected to a second coupling means comprising preferably a housing to be secured to the vehicle, whereby the connection can be automatically stabilized and secured when said ball bar comprising first coupling means is inserted or attached.

A towing bracket of this type is known from EP 0223996. With the known towing bracket the first and the second coupling means are interconnected by pressing together two pairs of corresponding surfaces (made up of two cylindrical cams and two cylindrical recesses) and two pairs of contra corresponding surfaces, which make line contact with each other. The two coupling means thus contact one another at four contacts, i.e. two conformable surface contacts and two line contacts, said contacts providing together a more or less statically defined connection.

The towing bracket according to the above-mentioned patent has two drawbacks, namely:
- Since the support is statically defined, the stability of the coupling is not optimal.
- The construction as a whole is rather complex and cannot be manufactured in an inexpensive manner. By way of illustration the cast-iron housing may be mentioned here, which requires machining operations, as well as the ball bar, which is made from square bar material by means of a metal-removing operation.

The object of the invention is to provide a detachable towing bracket having two coupling means which can be ideally interconnected, that is, without play and with a high degree of stability. It shall preferably also be possible to manufacture the towing bracket in a simple and inexpensive manner.

This object is achieved according to the invention by a towing bracket having the characteristics of claim 1.

The invention also relates to a method for manufacturing a towing bracket, wherein this method has the characteristics of claim 20 according to the invention.

According to the invention, the two coupling means can be brought into a connected position in which they contact one another at seven contact points or line contacts so that a statically overdefined connection results which is very stable.

When the two coupling means are brought into the connected position, the clamping body is supported and so to say pushed off by the second coupling means so that the clamping body presses the cams against abutting surfaces in or on the second coupling means which comprises preferably a housing.

Preferably said six fixed contact points or line contacts are distributed over two plano-parallel planes, three in each plane, which plano-parallel planes are disposed on either side of said first coupling means, whilst the seventh contact point or line contacts, which is formed by the clamping body pressing the two coupling means together, is positioned centrally between the two plano-parallel planes.

Preferably said seven contact points or line contacts are line contacts, which ensures a sufficient load-bearing capacity without having to subject the materials to special hardening processes.

The subject of the invention is subsequently illustrated with reference to embodiments shown in the drawings. In the drawings,
Fig. 1 shows a schematic, oblique view of parts of a towing bracket having a first coupling means provided with three cams on either side and a second coupling means in separated positions, an oblique view of said parts of the towing bracket wherein the first and second coupling means are in the connected position, a schematic side view of the cams of the first coupling means and of a housing part of the second coupling means and an end view of the housing part,
Fig. 2 shows analogous views as Fig. 1 of a towing bracket having a first coupling means provided with two cams on either side,
Fig. 3 shows a plate in various manufacturing states for forming a housing of the second coupling means,
Fig. 4A is a schematic representation of a towing bracket having a pivotable clamping body, partly in longitudinal section and partly in elevation,
Fig. 4B is an elevation of a rotary mechanism having a rotary knob of the towing brackets shown in Fig. 4A,
Figs 4C is an elevation of the rotary mechanism shown in Fig. 4B, but in another axial position of the rotary knob,
Fig. 5A is a schematic representation of a towing bar and first coupling means having an axially displaceable clamping body, partly in longitudinal section and partly in elevation,
Fig. 5B is a schematic representation of a towing bracket comprising the first coupling means shown in Fig. 5A, partly in longitudinal section and partly in elevation,
Fig. 6A is a schematic representation of another towing bracket having an axially displaceable clamping body in the connected position,
Fig. 6B shows the towing bracket of Fig. 6A, but in separate positions of the first and second coupling means,
Fig. 7A is a longitudinal section through a locking member comprising a displaceable clamping body connected to a displaceable pin and a rack,
Fig. 7B is a view of the underside of the locking member according to Fig. 6A and
Fig. 7C is a longitudinal section through another locking member having a displaceable clamping body and a displaceable pin and a rack.

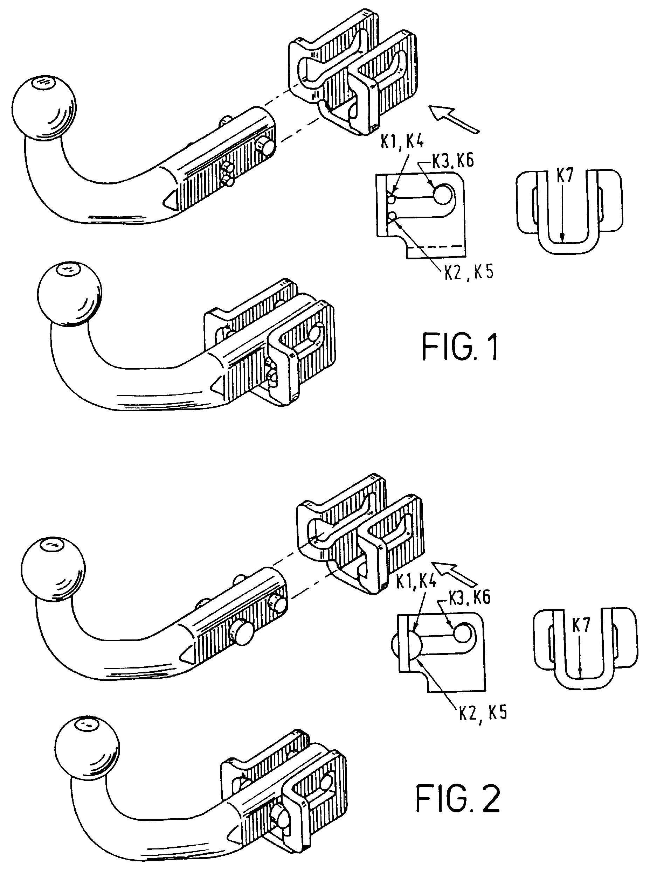

The embodiments of detachable towing brackets for a vehicle shown in the Figures 1 and 2 have a ball bar comprising a first coupling means which can be detachably connected to a second coupling means mounted on the vehicle. The first coupling means has a clamping body and cams. The second coupling means has a housing. When the two coupling means are connected to one another, the fixation takes place over seven contact points or line contacts K1, K2, K3, K4, K5, K6, K7. The contact point or line contact K7 is defined by the clamping body which itself can't be seen in the Figures 1 and 2. The clamping body is disposed in or on the other parts of the first coupling means, rests against and/or pushes off against the second coupling means at the contact point or line contact K7 and presses the cams against abutting surfaces on or in the second coupling means at the contact points or line contacts K1 - K6.

The embodiment of the towing bracket according to the invention shown in Fig. 1 has six fixed contact points or line contacts K1, K2, K3, K4, K5, K6 which are formed by a number of cams, namely six, which are located on said first coupling means and which are positioned such that they are arranged in pairs on one axis. The cams are pressed against six abutting surfaces in the housing of the second coupling means when the first and the second coupling means are in the connected position. Slots are provided in the two lateral surfaces or walls of the housing, said slots forming the stop surfaces for all cams. Said slots are preferably configured to receive and guide the two front cams when the ball bar is being attached, whilst the four rear cams are unable to pass the funnel-shaped entry of the slots.

In the embodiment of the towing bracket shown in Fig. 2 a simplification of the production process is realized by replacing the four rear cams by two cams which are dimensioned such that they are unable to pass the funnel-shaped entry of the slots, but are pressed against said entry when the ball bar is being attached, whereby four line contacts are formed.

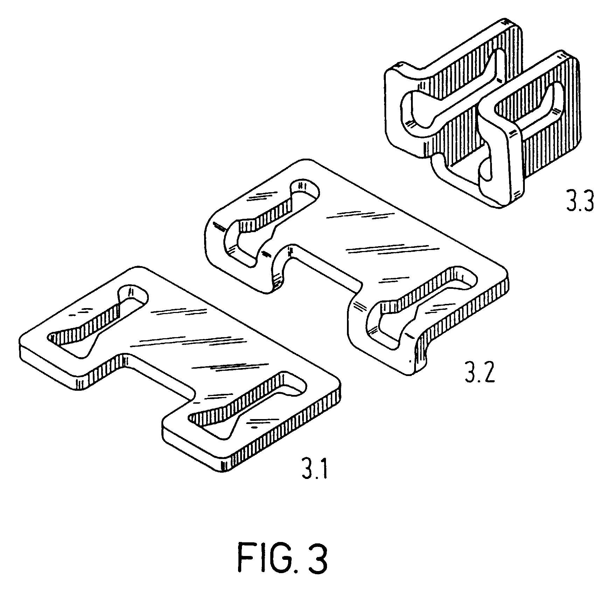

The part of the housings shown in Figures 1, 2 is formed from a steel plate by means of fine-blanking and bending operations, whereby the guide slots are punched out during the blanking operation. This is illustrated in Fig. 3 in which the numerals 3.1, 3.2, 3.3 designate various manufacturing states of the plate.

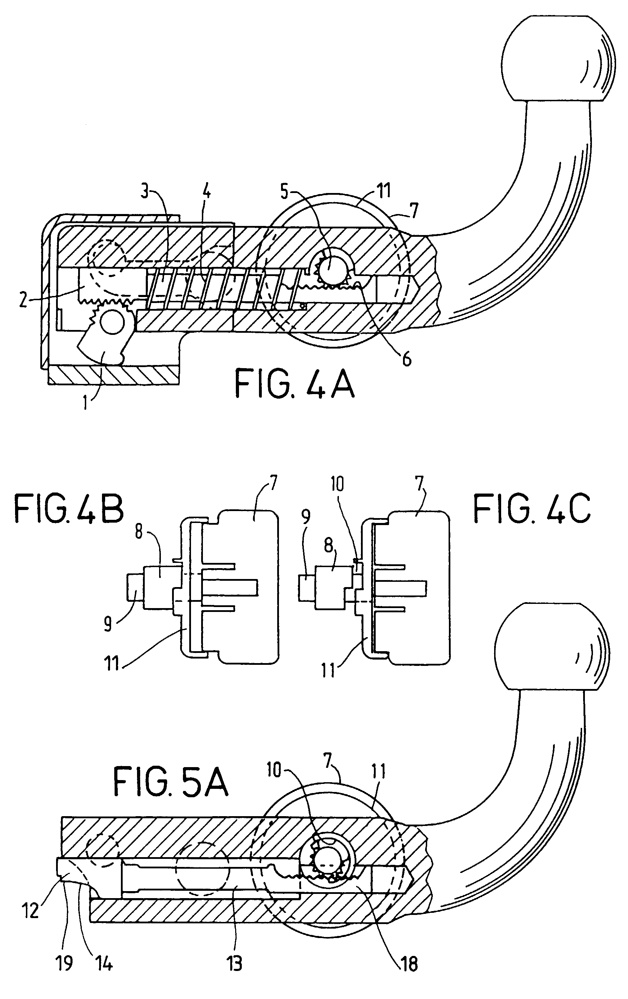

One embodiment of the towing bracket shown in Figures 4A, 4B, 4C is characterized in that said clamping body is an eccentric cam 1, which can be rotated by a rack 2, which engages teeth provided thereon. Said rack is positioned on the end of a cylindrical pin 3, which can move axially in the ball bar or the first coupling means, whereby said pin is driven by a spring 4 (when locking takes place automatically) or by a toothed wheel 5, which cooperates with a rack 6 provided on the other end of said pin (when unlocking takes place manually). In this embodiment the so-called first locking is effected by the cam profile, which in addition to having a part which provides the tightening effect by comprising a 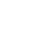 run-on angle" or a run-on surface of a certain number of degrees, also has a part comprising a "run-on angle" or a run-on surface of zero degrees. As a result of the presence of said zero degree surface any reverse rotation of the eccentric cam in the unlocking direction caused by the forces acting on the ball bar will be stopped automatically as soon as said eccentric cam arrives at said zero degree surface. The so-called second locking is provided by the rotary knob mechanism, because of the fact that the rotary knob 7 cannot make a complete turn against a spring force until it is depressed. In the extended position of the rotary knob (which is shown in Fig. 4B and into which position the knob springs automatically under the effect of a spring force when the ball bar is being attached), the rotary knob 7 is blocked against rotation as a result of a locking cam 8 provided on the shaft 9 engaging in an arcuate slot 10 of the the lock plate 11. When the knob is depressed by hand into the position shown in Fig. 4C the drive shaft will move in axial direction and said locking cam is released from the slot 10, after which the rotary knob 7 can be turned.

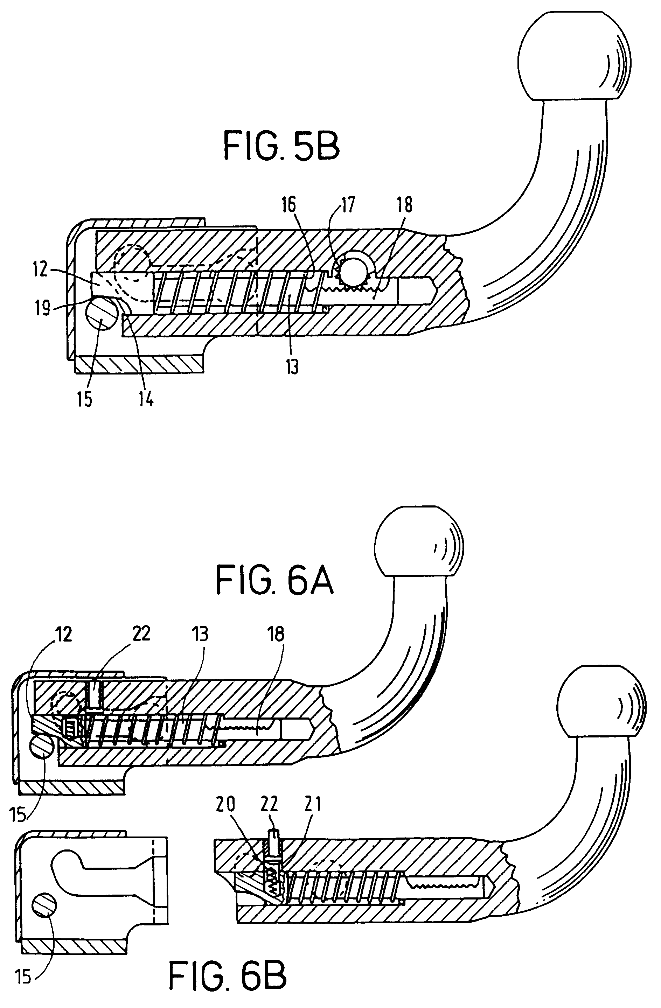

One embodiment of the towing bracket shown partly in Fig. 5A and in Fig. 5B is characterized in that the clamping body 12 is an axially movable head which is fixedly connected to the end of a cylindrical pin 13 or forms part thereof and has a cylindrical portion and a wedge-shaped end. The clamping body 12 can upon axial movement of the pin 13 push off with its sloping run-on surface 14 against a pin 15 present within the housing. The displaceable pin (13) is driven by a spring 16 (when locking takes place automatically) or by a toothed member 17 which forms a part of a toothed wheel and engages a rack 18 provided on the other end of the displaceable pin 13 (when locking takes place manually). Said toothed wheel or toothed member 17 is connected to the control knob 7 via the drive shaft (9). The first locking is effected because the wedge angle of a certain number of degrees (approx. 12 degrees) on the operative part of the run-on surface 14 slowly decreases to zero degrees at the end 19 of the run-on surface 14. This tapering (to a possible angle of zero degrees) ensures that when the forces acting on the ball bar should cause the wedge to move in axial direction, this movement is stopped automatically when the wedge angle has sufficiently decreased (to possibly zero degrees). The so-called second locking is achieved by the rotary knob mechanism described already with reference to the figures 4A, 4B, 4C.

Another embodiment of the towing bracket is partly shown in Figures 6A, 6B and comprises similar parts as the towing bracket shown in Figures 5A, 5B, but is completed so that the pin-like, axially displaceable locking member formed by the clamping body 12, the mentioned, first pin 13 and the rack 18 remains in the retracted position when the ball bar is detached, because in this position a pin 20, which moves radially within the pin-like locking member, moves outwards under the influence of spring force and thus projects into a bore 21 in the ball bar, pushing another pin 22 present within the ball bar outwards until it strikes a stop. When the ball bar is attached again said latter pin 22 is pushed back automatically as a result of making contact with the housing, after which the pin-like locking member moves back automatically again into the locking position under the influence of spring force.

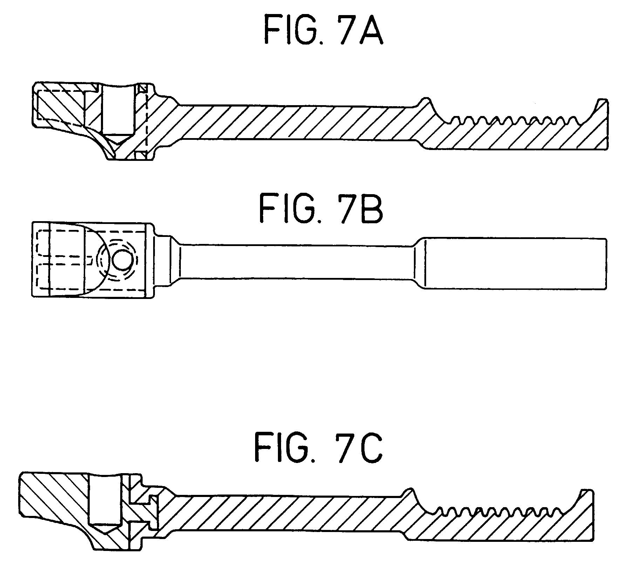

The cylindrical pin 13, the clamping body 12 formed by a head of the pin 13 and having a wedge-shaped end and the rack 18 shown in Figures 6A, 6B may for instance be formed or be replaced by the locking pin, i.e. pin-like locking member shown in Figures 7A, 7B or by the locking pin, i.e. pin-like locking member shown in Fig. 7C. Each of these locking members comprises a head disposed at one end. This head has a cylindrical portion and a wedge-shaped free end and forms the clamping body. For manufacturing the locking pin or pin-like locking member, at least the wedge-shaped end thereof is formed of a hard metal by means of machining (Fig. 7C) or by the so-called MIM process (Figures 7A, 7B). Both methods result in a hard wedge-shaped end of the pin-like locking member having the required strength. This hard product is then placed in a die-casting mould and completed to a pin-like locking member by forming - i.e. casting - a plastic or a suitable metal alloy thereon.

### MIM process

The MIM process - i.e. metal injection moulding process - is a rather new process, which comprises the following steps:
1) Granulated material consisting of a mixture of a suitable metal powder and a suitable plastic is formed into a first intermediate product by means of the so-called metal injection moulding process.
2) The first intermediate product formed under 1 is then immersed in a chemical bath, in which the plastic material present in the product is dissolved and removed again.
3) The porous, second intermediate product thus formed is sintered under a vacuum at a high temperature, whereby the porosity is lost and the material attains a density of nearly 100%. As a result of this nearly 100% density the properties of the material are practically identical to those of the original material i.e metal. In this manner a very hard and strong final product can be obtained without any metal removing operations being required.

## Claims

1. A detachable towing bracket for a vehicle, having a ball bar comprising a first coupling means and a second coupling means configured to be mounted on the vehicle, wherein the two coupling means can be brought into a connected position in which they are detachably connected to one another, wherein the first coupling means comprises a clamping body (1, 12) and cams, wherein the clamping body (1, 12) rests against the second coupling means at a contact point or line contact (K7) in said connected position so that the cams are pressed against abutting surfaces of the second coupling means at contact points or line contacts (K1, K2, K3, K4, K5, K6) in said connected position, characterised in that the cams define six of said contact points or line contacts (K1, K2, K3, K4, K5, K6) and that the two coupling means contact one another at seven contact points or line contacts (K1, K2, K3, K4, K5, K6, K7) in said connected position so that a statically overdefined connection between the two coupling means is obtained.

2. A towing bracket according to claim 1, characterised in that the first coupling means has two opposite sides, that two or three cams having an axis are disposed on either side of the first coupling means and that each cam is positioned such that its axis is aligned with the axis of a cam on the other side of the first coupling means (Figures 1 or 2).

3. A towing bracket according to claim 2, characterised in that the first coupling means comprises a front cam and two rear cams on each of said two sides of the first coupling means, that the second coupling means comprises a housing having slots provided in two lateral surfaces, that each slot has a funnel-shaped entry and a guide portion and forms the abutting surfaces for the cams, that the guide portions of the slots are configured to receive and guide the two front cams and that the four rear cams are disposed such that they are unable to pass the funnel-shaped entries, but abut against these entries in said connected position (Figure 1).

4. A towing bracket according to claim 2, characterised in that a front cam and a rear cam are disposed on each of said two sides of the first coupling means, that the second coupling means comprises a housing having slots provided in two lateral surfaces, that each slot has a funnel-shaped entry and a guide portion and forms the abutting surfaces for the cams, that the guide portions of the slots are configured to receive and guide the two front cams, that the two rear cams are dimensioned such that they are unable to pass the funnel-shaped entries of the slots, but are pressed against the entries in said connected position and that each rear cam defines two of the contact points or line contacts (K1, K2, K3, K4, K5, K6, K7).

5. A towing bracket according to any of claims 1 to 4, characterised in that the second coupling means comprises a housing having two lateral walls which are opposite to one another and comprise slots forming the abutting surfaces for the cams, that the clamping body (1, 12) is pivotable or displaceable relative to the ball bar and that the contact point or line contact (K7) defined by the clamping body (1, 12) is located between the two lateral walls (Figures 1, 2, 4A, 5B, 6A, 6B).

6. A towing bracket according to claim 5, characterised in that each lateral wall has a plane portion and an entry portion, that the plane portions are parallel to one another, that the entry portions of the lateral walls are projecting away from the plane portions and from one another, that each slot forms, in said connected position together with two or three of the cams, three of the contact points or line contacts (K1 - K7) and has a guide portion and an entry, that the guide portions are disposed substantially within the plane wall portions and that the entries of the slots are disposed in transitions between the plane portions and the entry portions of the lateral walls and/or adjacent to these transitions (Figures 1, 2, 3).

7. A towing bracket according to claim 5 or 6, characterised in that the second coupling means comprises a pin (15) disposed within the housing and forming in said connected position together with the clamping body (12) the contact point or line contact associated with the clamping body (12).

8. A towing bracket according to any of claims 3 to 7, characterised in that the two lateral walls and a wall connecting the two lateral walls are formed together of a one-piece plate.

9. A towing bracket according to any of claims 3 to 8, characterised in that said housing comprises a steel plate which has been shaped by blanking, for instance fine-blanking, and bending and has been provided with said slots by punching.

10. A towing bracket according to any of claims 1 to 6 or 8 or 9, characterised in that the clamping body consists of a pivotable eccentric cam (1) having teeth, that the first coupling means is provided with a first rack (2), a cylindrical, displaceable pin (3), a spring (4), a toothed member (5), a second rack (6) and a rotary mechanism, that the pin (3) is axially displaceable with respect to the ball bar, that the two racks (2, 6) are positioned on opposite ends of the pin (3), that the first rack (2) engages the teeth of the pivotable cam (1) so that the latter can be pivoted by the rack (2), that the spring (4) is configured to drive the racks (2, 6) and the pin (3) for automatically locking the first coupling means with respect to the second coupling means when the two coupling means are moved into the connected position and that the rotary mechanism is in operative connection with the second rack (6) to make it possible to displace the pin (3) and to unlock the two coupling means by manually operating the rotary mechanism (Figures 4A, 4B, 4C).

11. A towing bracket according to any of claims 1 to 9, characterised in that the first coupling means is provided with a cylindrical, displaceable pin (13) axially displaceable with respect to the ball bar, a rack (18) and a spring (16) and a rotary mechanism, that the clamping body (12) is fixedly connected to the displaceable pin (13) and has a wedge-shaped portion comprising a run-on surface (14) which is at least in part sloping relative to the direction of displacement of the displaceable pin (13) and configured to engage a pin (15) disposed within a housing of the second coupling means, that the spring (16) is configured to drive the clamping body (12) and the displaceable pin (13) for locking the first coupling means with respect to the second coupling means automatically when the two coupling means are moved into the connected position, that the rack (18) is disposed on an end of the displaceable pin (13) facing away from the clamping body (12) and that the rotary mechanism is in operative connection with the rack (18) to make it possible to displace the clamping body (12) by manually operating the rotary mechanism (Figures 5B, 6A, 6B, 7A, 7B, 7C).

12. A towing bracket according to claim 11, characterised in that the displaceable pin (13) and the rack (18) have been formed by casting a plastic or a metal alloy onto the clamping body (12) within a die-casting mould.

13. A towing bracket according to claim 11 or 12, characterised in that the wedge-shaped portion of the clamping body (12) consists of hard metal.

14. A towing bracket according any of claims 11 to 13, characterised in that the wedge-shaped portion of the clamping body (12) has been made by a metal injection moulding (MIM) process.

15. A towing bracket according to any of claims 10 to 14, characterised in that the first coupling means comprises a lock plate (11), that the rotary mechanism comprises a rotary knob (7), a drive shaft (9) secured to the latter, a locking cam (8) provided on the drive shaft (9), a toothed member (5, 17) connected to the drive shaft (9) and engaging the rack (6, 18) being in operative connection with the rotary mechanism and a lock spring for urging the locking cam (8) towards a locking position, that the locking cam (8) is configured to engage the lock plate (11) in the locking position for securing the drive shaft (9) against rotation and that the locking cam (8) is further configured such that it can be released from the lock plate (11) by depressing the knob (7) against a spring force produced by the lock spring, wherein the locking cam engages in the locking position for instance into a slot (10) of the lock plate (11) (Figures 4B, 4C, 5A).

16. A towing bracket according to claim 15, characterised in that the drive shaft (9), the toothed member (17) and the locking cam have been made by injection moulding or by a metal injection moulding (MIM) process (Figures 4A, 4B, 4C, 5A, 5B).

17. A towing bracket according to any of claims 1 to 16, characterised in that the first coupling means comprises a displaceable pin (3, 13), a spring (4) and a rotary mechanism, that the displaceable pin (3, 13) is displaceable in axial direction of the ball bar relative to the latter, that the clamping body (1, 12) is movable relative to the ball bar by means of the displaceable pin (3, 13) and/or rigidly connected to the latter, that the spring (4) is configured to drive the displaceable pin (3, 13) towards a locking position in which the clamping body (1, 12) locks the first coupling means when the two coupling means are in the connected position, that the rotary mechanism is in operative connection with the displaceable pin (3, 13) for displacing the latter from said locking position to a retracted position by manually operating the rotary mechanism, that the displaceable pin (3, 13) and/or the clamping body (12) holds a movable member (20) which is movable radially to the pin (3, 13), that a spring means is provided which exerts an outwards directed spring force onto said movable member (20) so that the latter projects in said retracted position into a bore (21) of the ball bar for locking the displaceable pin (3, 13) in said retracted position and pushes thereby another movable member (22) held in the bore (21) of the ball bar outwards and that this other movable member is configured such that it is pushed back by the second coupling means and pushes in its turn the movable member (20) held by the displaceable pin (3, 13) out of the bore (21) of the ball bar while the first coupling means is moved into the connected position.

18. A towing bar according to claim 17, characterised in that the displaceable pin (3, 13) is disposed within the ball bar and that the two movable members are pins (20, 22).

19. A towing bar according to any of claims 1 to 18, characterised in that the second coupling means comprises a housing and that the ball bar comprises a portion having a round cross-section and an end portion flattened to such a width that the end portion can be received within the housing.

20. A method for manufacturing a detachable towing bracket for a vehicle, having a ball bar comprising a first coupling means and a second coupling means comprising a housing and configured to be mounted on the vehicle, wherein the two coupling means can be brought into a connected position in which they are detachably connected to one another, wherein the first coupling means comprises a clamping body (1, 12) and cams, wherein the clamping body (1, 12) rests against the housing at a contact point or line contact (K7) in said connected position so that the cams are pressed against abutting surfaces of the housing at contact points or line contacts (K1, K2, K3, K4, K5, K6) in said connected position, characterised in that the cams define six of said contact points or line contacts (K1, K2, K3, K4, K5, K6, K7), that the two coupling means contact one another at seven contact points or line contacts (K1, K2, K3, K4, K5, K6, K7) in said connected position so that a statically overdefined connection between the two coupling means is obtained, that the housing comprises two lateral walls or surfaces having slots forming the abutting surfaces for the cams and that a steel plate is made by blanking, provided with slots by punching and bent so as to form the two lateral walls or surfaces of the housing.

21. A method according to claim 20, characterised in that the blanking of the steel plate is fine-blanking.

22. A method according to claim 20 or 21, characterised in that the first clamping means comprises a cylindrical pin (13) axially displaceable with respect to the ball bar and a rack (18), that the clamping body (12) is placed in a die-casting mould and that the pin (13) and the rack (18) are then formed by casting a metal alloy or a plastic onto the clamping body (12) within the mould.

23. A method according to claim 22 characterised in that the clamping body (12) is made by a metal injection moulding (MIM) process.

24. A method according to claim 23, characterised in that a mixture of a metal powder and of a plastic is formed for the metal injection moulding (MIM) process, that the mixture is injected into a mould so that a first intermediate product is formed, that the plastic is removed so that a second, porous intermediate product is formed and that the latter is sintered so as to form the clamping body (12).

## Patentansprüche

1. Abnehmbare Anhängevorrichtung für ein Fahrzeug, die eine Kugelstange mit einem ersten Kupplungsmittel und ein zweites, am Fahrzeug ausgebildetes Kupplungsmittel aufweist, wobei die zwei Kupplungsmittel in eine verbundene Position gebracht werden können, in welcher sie lösbar miteinander verbunden sind, wobei das erste Kupplungsmittel einen Klemmkörper (1, 12) und Nocken aufweist, wobei der Klemmkörper (1, 12) in der verbundenen Position bei einem Kontaktpunkt oder bei einem Linienkontakt (K7) am zweiten Kupplungsmittel anliegt, so dass die Nocken in der verbundenen Position bei Kontaktpunkten oder Linienkontakten (K1, K2, K3, K4, K5, K6) gegen anstossende Flächen des zweiten Kupplungsmittels gedrückt werden, dadurch gekennzeichnet, dass die Nocken sechs der genannten Kontaktpunkte oder Linienkontakte (K1, K2, K3, K4, K5, K6) definieren und dass die zwei Kupplungsmittel einander in der verbundenen Position an sieben an Kontaktpunkten oder Linienkontakten (K1, K2, K3, K4, K5, K6, K7) berühren, so dass sich eine statisch überdefinierte Verbindung zwischen den zwei Kupplungsmitteln ergibt.

2. Anhängevorrichtung nach Anspruch 1, dadurch gekennzeichnet, dass das erste Kupplungsmittel zwei einander gegenüberliegende Seiten aufweist, dass zwei oder drei Nocken mit einer Achse an jeder Seite des ersten Kupplungsmittels angeordnet sind und dass jeder Nocken so positioniert ist, dass seine Achse mit der Achse eines Nockens auf der anderen Seite des ersten Kupplungsmittels in einer Linie liegt.

3. Anhangevorrichtung nach Anspruch 2, dadurch gekennzeichnet, dass das erste Kupplungsmittel an jeder der zwei Seiten des ersten Kupplungsmittels einen vorderen Nocken und zwei hintere Nocken aufweist, dass das zweite Kupplungsmittel ein Gehäuse aufweist, das Schlitze in zwei seitlichen Flächen besitzt, dass jeder Schlitz einen trichterförmigen Eingang und einen Führungsabschnitt besitzt und die an die Nocken anstossenden Flächen bildet, dass die Führungsabschnitte der Schlitze ausgebildet sind, um die zwei vorderen Nocken aufzunehmen und zu führen und dass die vier hinteren Nocken so angeordnet sind, dass sie nicht in die trichterförmigen Eingänge eindringen können, sondern in der verbundenen Position an diese Eingänge anstossen (Figur 1).

4. Anhängevorrichtung nach Anspruch 2, dadurch gekennzeichnet, dass an jeder der zwei Seiten des ersten Kupplungsmittels ein vorderer und ein hinterer Nocken angeordnet sind, dass das zweite Kupplungsmittel ein Gehäuse mit Schlitzen in zwei seitlichen Flächen besitzt, dass jeder Schlitz einen trichterförmigen Eingang und einen Führungsabschnitt besitzt und für die Nocken die anstossenden Flächen bildet, dass die Führungsabschnitte der Schlitze ausgebildet sind, um die zwei vorderen Nocken aufzunehmen und zu führen, dass die zwei hinteren Nocken so dimensioniert sind, dass sie nicht in die trichterförmigen Eingänge der Schlitze eindringen können, sondern in der verbundenen Position an diese Eingänge angedrückt werden, und dass jeder hintere Nocken zwei der Kontaktpunkte oder Linienkontakte (K1, K2, K3, K4, K5, K6, K7) definiert.

5. Anhängevorrichtung nach einem der Ansprüche 1 bis 4, dadurch gekennzeichnet, dass das zweite Kupplungsmittel ein Gehäuse mit zwei seitlichen, einander gegenüberliegenden Wänden mit Schlitzen aufweist, die für die Nocken die anstossenden Flächen bilden, dass der Klemmkörper (1, 12) relativ zur Kugelstange verschwenkbar oder verschiebbar ist und dass der Kontaktpunkt oder Linienkontakt, der durch den Klemmkörper (1, 12) definiert wird, sich zwischen den zwei seitlichen Wänden befindet.

6. Anhängevorrichtung nach Anspruch 5, dadurch gekennzeichnet, dass jede seitliche Wand einen ebenen Abschnitt und einen Eingangsabschnitt aufweist, dass die ebenen Abschnitte zueinander parallel sind, dass die Eingangsabschnitte der seitlichen Wände von den ebenen Abschnitten und voneinander wegragen, dass jeder Schlitz in der verbundenen Position zusammen mit zwei oder drei der Nocken drei der Kontaktpunkte oder Linienkontakte (K1, K2, K3, K4, K5, K6, K7) bildet und einen Führungsabschnitt und einen Eingang besitzt, dass die Führungsabschnitte im Wesentlichen innerhalb der ebenen Wandabschnitte angeordnet sind und dass die Eingänge der Schlitze in Übergangsabschnitten zwischen den ebenen Abschnitten und den Eingangsabschnitten der seitliche Wände und/oder an diese anschliessend angeordnet sind (Figuren 1, 2, 3).

7. Anhängevorrichtung nach Anspruch 5 oder 6, dadurch gekennzeichnet, dass das zweite Kupplungsmittel einen Stift (15) aufweist, der innerhalb des Gehäuses angeordnet ist und in der verbundenen Position mit dem Klemmkörper (12) den Kontaktpunkt oder Linienkontakt bildet, der dem Klemmkörper (12) zugeordnet ist.

8. Anhängevorrichtung nach einem der Ansprüche 3 bis 7, dadurch gekennzeichnet, dass die zwei seitlichen Wände und eine Wand, die die seitlichen Wände miteinander verbindet, zusammen aus einer einstückigen Platte hergestellt sind.

9. Anhängevorrichtung nach einem der Ansprüche 3 bis 8, dadurch gekennzeichnet, dass das Gehäuse eine Stahlplatte aufweist, die durch Stanzen, beispielsweise Feinsstanzen, und Biegen geformt und durch Stanzen mit den Schlitzen versehen worden ist.

10. Anhängevorrichtung nach einem der Ansprüche 1 bis 6 oder 8 oder 9, dadurch gekennzeichnet, dass der Klemmkörper aus einem verschwenkbaren, exzentrischen Nocken (1) mit Zähnen besteht, dass das erste Kupplungsmittel mit einer ersten Zahnstange (2), einem zylindrischen, verschiebbaren Stift(3), einer Feder (4), einem verzahnten Element (5), einer zweiten Zahnstange (6) und einem Drehmechanismus versehen ist, dass der Stift (3) relativ zur Kugelstange axial verschiebbar ist, dass die zwei Zahnstangen (2, 6) an einander gegenüberliegenden Enden des Stifts (3) angeordnet sind, dass die erste Zahnstange (2) in die Zähne des verschwenkbaren Nockens (1) eingreift, so dass dieser durch die Zahnstange (2) verschwenkt werden kann, dass die Feder (4) ausgebildet ist, um die Zahnstangen (2, 6) und den Stift (3) anzutreiben, dass diese automatisch das erste Kupplungsmittel bezüglich des zweiten Kupplungsmittels verriegeln, wenn die zwei Kupplungsmittel in die verbundene Position gebracht werden, und dass der Drehmechanismus in Wirkverbindung mit der zweiten Zahnstange (6) steht, damit der Stift (3) verschoben werden kann und die zwei Kupplungsmittel entriegelt werden können, indem der Drehmechanismus manuell betätigt wird. (Figuren 4A, 4B, 4C)

11. Anhängevorrichtung nach einem der Ansprüche 1 bis 9, dadurch gekennzeichnet, dass das erste Kupplungsmittel mit einem zylindrischen, verschiebbaren Stift (13), der relativ zur Kugelstange axial verschiebbar ist, einer Zahnstange (18) und einer Feder (16) und einem Drehmechanismus versehen ist, dass der Klemmkörper (12) starr mit dem verschiebbaren Stift (13) verbunden ist und einen keilförmigen Abschnitt mit einer Auflauffläche (14) aufweist, die zumindest teilweise in Bezug auf die Verschieberichtung des verschiebbaren Stiftes (13) geneigt und ausgestaltet ist, um an einem innerhalb eines Gehäuses des zweiten Kupplungsmittels angeordneten Stift (15) anzugreifen, dass die Feder (16) ausgebildet ist, um den Klemmkörper (12) und den verschiebbaren Stift (13) derart anzutreiben, dass das erste Kupplungsmittel bezüglich des zweiten Kupplungsmittels automatisch verriegelt wird, wenn die Kupplungsmittel in die verbundene Position gebracht werden, dass die Zahnstange (18) an einem dem Klemmkörper (12) abgewandten Ende des verschiebbaren Stiftes (13) angeordnet ist, und dass der Drehmechanismus in Wirkverbindung mit der Zahnstange (18) stehz, damit der Klemmkörper (12) durch manuelles Betätigen des Drehmechanismus verschoben werden kann (Figuren 5B, 6A, 6B, 7A, 7B, 7C).

12. Anhängevorrichtung nach Anspruch 11, dadurch gekennzeichnet, dass der verschiebbare Stift (13) und die Zahnstange (18) durch Angiessen eines Kunststoffes oder einer Metalllegierung an den Klemmkörper in einer Spritzgussform hergestellt worden sind.

13. Anhängevorrichtung nach Anspruch 11 oder 12, dadurch gekennzeichnet, dass der keilförmige Abschnitt des Klemmkörpers (12) aus Hartmetall besteht.

14. Anhängevorrichtung nach einem der Ansprüche 11 bis 13, dadurch gekennzeichnet, dass der keilförmige Abschnitt des Klemmkörpers (12) durch einen Metall-Spritzguss(MIM)-Prozess hergestellt worden ist.

15. Anhängevorrichtung nach einem der Ansprüche 10 bis 14, dadurch gekennzeichnet, dass das erste Kupplungsmittel eine Verriegelungsplatte (11) aufweist, dass der Drehmechanismus einen Drehknopf (7), eine an diesem befestigten Antriebswelle (9), einen auf der Antriebswelle (9) angeordneten Verriegelungsnocken (8), ein mit der Antriebswelle (9) verbundenes und in die in Wirkverbindung mit dem Drehmechanismus stehende Zahnstange (6, 18) eingreifendes, verzahntes Element (5, 17) und eine Schliessfeder aufweist, um den Verriegelungsnocken (8) in eine Verriegelungsposition zu treiben, dass der Verriegelungsnocken (8) ausgebildet ist, um in der Verriegelungsposition in die Verriegelungsplatte (11) einzugreifen, um die Antriebswelle (9) gegen eine Rotation zu sichern, und dass der Verriegelungsnocken (8) weiter derart ausgebildet ist, dass er von der Verriegelungsplatte (11) gelöst werden kann, indem der Knopf (7) entgegen einer von der Schliessfeder erzeugten Federkraft gedrückt wird, wobei der Verriegelungsnocken (8) in der Verriegelungsposition beispielsweise in einen Schlitz (10) in der Verriegelungsplatte (11) eingreift (Figuren 4B, 4C, 5A).

16. Anhängevorrichtung nach Anspruch 15, dadurch gekennzeichnet, dass die Antriebswelle (9), das verzahnte Element (17) und der Verriegelungsnocken durch Spritzgiessen oder einen Metall-Spritzguss (MIM)-Prozess hergestellt worden sind.

17. Anhängevorrichtung nach einem der Ansprüche 1 bis 16, dadurch gekennzeichnet, dass das erste Kupplungsmittel einen verschiebbaren Stift (3, 13), eine Feder (4) und einen Drehmechanismus aufweist, dass der verschiebbare Stift (3, 13) in axialer Richtung der Kugelstange relativ zu dieser verschiebbar ist, dass der Klemmkörper (1, 12) durch den verschiebbaren Stift (3, 13) relativ zur Kugelstange bewegbar und/oder starr mit diesem verbunden ist, dass die Feder (4) ausgebildet ist, um den verschiebbaren Stift (3, 13) in die Verriegelungsstellung zu treiben, in welcher der Klemmkörper (1, 12) das erste Kupplungsmittel verriegelt, wenn die zwei Kupplungsmittel in der verbundenen Position sind, dass der Drehmechanismus in Wirkverbindung mit dem verschiebbaren Stift (3, 13) steht, damit dieser durch manuelles Betätigen des Drehmechanismus aus der Verriegelungsposition in eine zurückgezogene Position verschoben werden kann, dass der verschiebbare Stift (3, 13) und/oder der Klemmkörper (12) ein bewegbares Element (20) hält, das radial zum Stift (3, 13) bewegbar ist, dass Federmittel vorhanden sind, die eine nach aussen gerichtete Federkraft auf das bewegbare Element (20) ausübt, so dass dieses in der genannten zurückgezogenen Position in eine Bohrung (21) in der Kugelstange hineinragt, um den verschiebbaren Stift (3, 13) in der genannten zurückgezogenen Position zu verriegeln, und dabei ein anderes, in der Bohrung (21) der Kugelstange gehaltenes, bewegbares Element (22) nach aussen stösst und dass dieses andere bewegbare Element so ausgebildet ist, dass es durch das zweite Kupplungsmittel zurückgestossen wird und seinerseits das bewegbare, vom verschiebbaren Stift (3, 13) gehaltene Element (20) aus der Bohrung (21) der Kugelstange stösst, während das erste Kupplungsmittel in die verbundene Position bewegt wird.

18. Anhängevorrichtung nach Anspruch 17, dadurch gekennzeichnet, dass der verschiebbare Stift (3, 13) innerhalb der Kugelstange angeordnet ist und dass die zwei bewegbaren Elemente als Stifte (20, 22) ausgebildet sind.

19. Anhängevorrichtung nach einem der Ansprüche 1 bis 18, dadurch gekennzeichnet, dass das zweite Kupplungsmittel ein Gehäuse aufweist und dass die Kugelstange einen Abschnitt mit einem runden Querschnitt und einen Endabschnitt aufweist, der so weit abgeflacht ist, dass er im Gehäuse aufgenommen werden kann.

20. Verfahren zur Herstellung einer abnehmbaren Anhängevorrichtung für ein Fahrzeug, die eine Kugelstange mit einem ersten Kupplungsmittel und ein zweites, ein Gehäuse besitzendes, zum Anbringen am Fahrzeug ausgebildetes Kupplungsmittel besitzt, wobei die zwei Kupplungsmittel in eine verbundene Position gebracht werden können, in welcher sie lösbar miteinander verbunden sind, wobei das erste Kupplungsmittel einen Klemmkörper (1, 12) und Nocken aufweist, wobei der Klemmkörper (1, 12) in der verbundenen Position bei einem Kontaktpunkt oder bei eine Linienkontakt (K7) am Gehäuse anliegt, so dass die Nocken an Kontaktpunkten oder Linienkontakten (K1, K2, K3, K4, K5, K6) gegen anstossende Flächen des Gehäuses gedrückt werden, dadurch gekennzeichnet, dass die Nocken sechs der genannten an Kontaktpunkte oder Linienkontakte (K1, K2, K3, K4, K5, K6) definieren, dass die zwei Kupplungsmittel einander in der verbundenen Position an sieben an Kontaktpunkten oder Linienkontakten (K1, K2, K3, K4, K5, K6, K7) berühren, so dass sich eine statisch überdefinierte Verbindung zwischen den zwei Kupplungsmitteln ergibt, dass das Gehäuse zwei seitliche Wände oder Flächen mit Schlitzen aufweist, die die anstossenden Flächen für die Nocken bilden und dass eine Stahlplatte durch Stanzen hergestellt, durch Stanzen mit Schlitzen versehen und so gebogen wird, dass sie die zwei seitlichen Wände oder Flächen des Gehäuses bildet.

21. Verfahren nach Anspruch 20, dadurch gekennzeichnet, dass das Stanzen der Stahlplatte ein Feinstanzen ist.

22. Verfahren nach Anspruch 20 oder 21, dadurch gekennzeichnet, dass das erste Klemmmittel einen zylindrischen, relativ zur Kugelstange axial verschiebbaren Stift (13) und eine Zahnstange (18) aufweist, dass der Klemmkörper (12) in eine Spritzgussform gelegt wird und dass der Stift (13) und die Zahnstange (18) anschliessend durch Angiessen einer Metalllegierung oder eines Kunststoffs an den Klemmkörper (12) in der Form hergestellt werden.

23. Verfahren nach Anspruch 22, dadurch gekennzeichnet, dass der Klemmkörper (12) durch einen Metall-Spritzguss (MIM)-Prozess hergestellt wird.

24. Verfahren nach Anspruch 23, dadurch gekennzeichnet, dass für den Metall-Spritzguss (MIM)-Prozess eine Mischung aus einem Metallpulver und einem Kunststoff gebildet wird, dass die Mischung in eine Form eingespritzt wird, so dass ein erstes Zwischenprodukt gebildet wird, dass der Kunststoff entfernt wird, so dass ein zweites, poröses Zwischenprodukt gebildet wird, und dass dieses gesintert wird, um den Klemmkörper (12) zu bilden.

## Revendications

1. Dispositif d'attelage de remorque détachable pour un véhicule, présentant une barre à boule comportant un premier moyen d'accouplement et un deuxième moyen d'accouplement configuré pour être monté sur le véhicule, dans lequel les deux moyens d'accouplement peuvent être amenés en position reliée dans laquelle ils sont reliés l'un à l'autre de manière détachable, le premier moyen d'accouplement comportant un corps de serrage (1,12) et des cames, et dans ladite position reliée, le corps de serrage (1, 12) repose contre le deuxième moyen d'accouplement en un point de contact ou en un contact linéaire (K7) de sorte que, dans ladite position reliée, les cames sont repoussées contre des surfaces de butée du deuxième moyen d'accouplement en des points de contact ou des contacts linéaires (K1, K2, K3, K4, K5, K6), caractérisé en ce que les cames définissent six desdits points de contact ou contacts linéaires (K1, K2, K3, K4, K5, K6) et en ce que les deux moyens d'accouplement sont en contact l'un avec l'autre en sept points de contact ou contacts linéaires (K1, K2, K3, K4, K5, K6, K7) dans ladite position reliée, de sorte que l'on obtient une liaison hyperstatique entre les deux moyens d'accouplement.

2. Dispositif d'attelage de remorque selon la revendication 1, caractérisé en ce que le premier moyen d'accouplement présente deux côtés opposés, en ce que deux ou trois cames dotées d'un axe sont disposées sur chacun des deux côtés du premier moyen d'accouplement, et en ce que chaque came est disposée de telle sorte que son axe soit aligné sur l'axe d'une came située de l'autre côté du premier moyen d'accouplement (figures 1 ou 2).

3. Dispositif d'attelage de remorque selon la revendication 2, caractérisé en ce que le premier moyen d'accouplement comporte une came avant et deux cames arrière sur chacun desdits deux côtés du premier moyen d'accouplement, en ce que le deuxième moyen d'accouplement comporte un logement doté de fentes dans deux surfaces latérales, en ce que chaque fente présente une entrée en forme d'entonnoir et une partie de guidage et forme une surface de butée pour les cames, en ce que les parties de guidage des Lentes sont configurées de manière à recevoir et guider les deux cames avant et en ce que, dans ladite position reliée, les quatre cames arrière sont disposées de telle sorte qu'elles ne sont pas capables de passer les entrées en forme d'entonnoir mais viennent buter contre ces entrées (figure 1).

4. Dispositif d'attelage de remorque selon la revendication 2 caractérisée en ce qu'une came avant et une came arrière sont disposées sur chacun desdits deux côtés du premier moyen d'accouplement, en ce que le deuxième moyen d'accouplement comporte un logement présentant des fentes prévues dans deux surfaces latérales, en ce que chaque fente présente une entrée en forme d'entonnoir et une partie de guidage et forme les surfaces de butée pour les cames, en ce que les parties de guidage des fentes sont configurées pour recevoir et guider les deux cames avant, en ce que les deux cames arrière sont dimensionnées de manière à ne pas pouvoir passer les entrées en forme d'entonnoir des fentes, mais sont repoussées contre les entrées dans ladite position reliée, et en ce que chaque came arrière définit deux des points de contact ou contacts linéaires (K1, K2, K3, K4, K5, K6, K7).

5. Dispositif d'attelage de remorque selon l'une quelconque des revendications 1 à 4, caractérisé en ce que le deuxième moyen d'accouplement comporte un logement présentant deux parois latérales qui sont opposées l'une à l'autre et qui comprennent des fentes formant les surfaces de butée des cames, en ce que le corps de serrage (1, 12) peut pivoter ou être déplacé par rapport à la barre à boule, et en ce que le point de contact ou le contact linéaire (K7) défini par le corps de serrage (1, 12) est situé entre les deux parois latérales (figures 1, 2, 4A, 5B, 6A, 6B).

6. Dispositif d'attelage de remorque selon la revendication 5, caractérisé en ce que chaque paroi latérale présente une partie plane et une partie d'entrée, en ce que les parties planes sont parallèles l'une à l'autre, en ce que les parties d'entrée des parois latérales débordent des parties planes et s'éloignent l'une de l'autre, en ce que dans ladite position reliée, chaque fente forme avec deux ou trois des cames, trois des points de contact ou contacts linéaires (K1 - K7), et présente une partie de guidage et une entrée, en ce que les parties de guidage sont disposées essentiellement dans les parties de parois planes et en ce que les entrées des fentes sont disposées dans les transitions entre les parties planes et les parties d'entrée des parois latérales et/ou en position adjacente à ces transitions (figures 1, 2, 3).

7. Dispositif d'attelage de remorque selon la revendication 5 ou 6, caractérisé en ce que le deuxième moyen d'accouplement comporte un goujon (15) disposé à l'intérieur du logement et qui, dans ladite position reliée, forme avec le corps de serrage (12) le point de contact ou contact linéaire associé au corps de serrage (12).

8. Dispositif d'attelage de remorque selon l'une quelconque des revendications 3 à 7, caractérisé en ce que les deux parois latérales et une paroi reliant les deux parois latérales sont formées ensemble à partir d'une plaque en une seule pièce.

9. Dispositif d'attelage de remorque selon l'une quelconque des revendications 3 à 8, caractérisé en ce que ledit logement comporte une plaque d'acier qui a été mise en forme par estampage, par exemple par estampage fin, et coudage, et a été dotée desdites fentes par poinçonnage.

10. Dispositif d'attelage de remorque selon l'une quelconque des revendications 1 à 6 ou 8 ou 9, caractérisé en ce que le corps de serrage est constitué d'une came excentrique rotative (1) présentant des dents, en ce que le premier moyen d'accouplement est doté d'une première crémaillère (2), d'un goujon cylindrique déplaçable (3), d'un ressort (4), d'un élément denté (5), d'une deuxième crémaillère (6) et d'un mécanisme rotatif, en ce que le goujon (3) peut être déplacé axialement par rapport à la barre à boule, en ce que les deux crémaillères (2, 6) sont disposées à des extrémités opposées du goujon (3), en ce que la première crémaillère (2) engage les dents de la came rotative (1) de telle sorte que cette dernière peut être pivotée par la crémaillère (2), en ce que le ressort (4) est configuré de manière à entraîner les crémaillères (2, 6) et le goujon (3) en vue de verrouiller automatiquement le premier moyen d'accouplement par rapport au deuxième moyen d'accouplement lorsque les deux moyens d'accouplement sont déplacés vers la position reliée, et en ce que le mécanisme rotatif est en liaison fonctionnelle avec la deuxième crémaillère (6) pour lui permettre de déplacer le goujon (3) et de déverrouiller les deux moyens d'accouplement en actionnant manuellement le mécanisme rotatif (figures 4A, 4B, 4C).

11. Dispositif d'attelage de remorque selon l'une quelconque des revendications 1 à 9, caractérisé en ce que le premier moyen d'accouplement est doté d'un goujon cylindrique déplaçable (13) qui peut être déplacé axialement par rapport à la barre à boule, d'une crémaillère (18), d'un ressort (16) et d'un mécanisme rotatif, en ce que le corps de serrage (12) est relié fixement au goujon déplaçable (13) et présente une partie en forme de coin comportant une surface d'attaque (14) qui forme au moins en partie une pente par rapport à la direction du déplacement du goujon déplaçable (13) et qui est configurée de manière à engager un goujon (15) disposé dans un logement du deuxième moyen d'accouplement, en ce que le ressort (16) est configuré pour entraîner le corps de serrage (12) et le goujon déplaçable (13) pour verrouiller automatiquement le premier moyen d'accouplement par rapport au deuxième moyen d'accouplement lorsque les deux moyens d'accouplement sont déplacés dans la position reliée, en ce que la crémaillère (18) est disposée sur une extrémité du goujon déplaçable (13) qui s'éloigne du corps de serrage (12), et en ce que le mécanisme rotatif est en liaison fonctionnelle avec la crémaillère (18), pour lui permettre de déplacer le corps de serrage (12) en actionnant manuellement le mécanisme rotatif (figures 5B, 6A, 6B, 7A, 7B, 7C).

12. Dispositif d'attelage de remorque selon la revendication 11, caractérisé en ce que le goujon déplaçable (13) et la crémaillère (18) ont été formés en moulant un plastique ou un alliage de métal sur le corps de serrage (12) placé à l'intérieur d'un moule de moulage par injection.

13. Dispositif d'attelage de remorque selon la revendication 11 ou 12, caractérisé en ce que la partie en forme de biseau du corps de serrage (12) est réalisée en un métal dur.

14. Dispositif d'attelage de remorque selon l'une quelconque des revendications 11 à 13, caractérisé en ce que la partie en forme de biseau du corps de serrage (12) a été réalisée par une opération de moulage par injection de métal (MIM).

15. Dispositif d'attelage de remorque selon l'une quelconque des revendications 10 à 14, caractérisé en ce que le premier moyen d'accouplement comporte une plaque de verrouillage (11), en ce que le mécanisme rotatif comporte un bouton rotatif (7), un arbre d'entraînement (9) fixé à ce dernier, une came de verrouillage (8) prévue sur l'arbre d'entraînement (9), un élément denté (5, 17) relié à l'arbre d'entraînement (9) et engageant la crémaillère (6, 18) étant en liaison fonctionnelle avec le mécanisme rotatif, et un ressort de verrouillage servant à repousser la came de verrouillage (8) vers une position de verrouillage, en ce que dans la position de verrouillage, la came de verrouillage (8) est configurée de manière à engager la plaque de verrouillage (11) pour empêcher que l'arbre d'entraînement (9) tourne, et en ce que la came de verrouillage (8) est en outre configurée de telle sorte qu'elle puisse être libérée de la plaque de verrouillage (11) en enfonçant le bouton (7) en opposition à une force élastique exercée par le ressort de verrouillage, et dans la position de verrouillage, la came de verrouillage s'engage par exemple dans une fente (10) de la plaque de verrouillage (11) (figures 4B, 4C, 5A).

16. Dispositif d'attelage de remorque selon la revendication 15, caractérisé en ce que l'arbre d'entraînement (9), l'élément denté (17) et la came de verrouillage ont été réalisés par moulage par injection ou par une opération de moulage par injection de métal (MIM) (figures 4A, 4B, 4C, 5A, 5B).

17. Dispositif d'attelage de remorque selon l'une quelconque des revendications 1 à 16, caractérisé en ce que le premier moyen d'accouplement comporte un goujon déplaçable (3, 13), un ressort (4) et un mécanisme rotatif, en ce que le goujon déplaçable (3, 13) peut être déplacé dans la direction axiale de la barre à boule par rapport à cette dernière, en ce que le corps de serrage (1, 12) peut être déplacé par rapport à la barre à boule a moyen du goujon déplaçable (3, 13) et/ou est relié rigidement à ce dernier, en ce que le ressort (4) est configuré de manière à entraîner le goujon déplaçable (3, 13) en direction d'une position de verrouillage dans laquelle le corps de serrage (1, 12) verrouille le premier moyen d'accouplement lorsque les deux moyens d'accouplement sont dans leur position reliée, en ce que le mécanisme rotatif est en liaison fonctionnelle avec le goujon déplaçable (3, 13) pour déplacer ce dernier de ladite position de verrouillage jusque dans une position rétractée, par actionnement manuel du mécanisme rotatif, en ce que le goujon déplaçable (3, 13) et/ou le corps de serrage (12) retiennent un élément mobile (20) qui peut être déplacé radialement par rapport au goujon (3, 13), en ce qu'il est prévu un moyen à ressort qui exerce une force élastique dirigée vers l'extérieur sur ledit élément mobile (20) de telle sorte que, dans ladite position rétractée, ce dernier déborde dans un alésage (21) de la barre à boule pour verrouiller le goujon déplaçable (3, 13) dans ladite position rétractée, et repousse ainsi vers l'extérieur un autre élément mobile (22) maintenu dans l'alésage (21) de la barre à boule, et en ce que cet autre élément mobile est configuré de telle sorte qu'il est repoussé en arrière par le deuxième moyen d'accouplement et repousse à son tour l'élément mobile (20) retenu par le goujon déplaçable (3, 13) hors de l'alésage (21) de la barre à boule pendant que le premier moyen d'accouplement est amené dans la position relie.

18. Dispositif d'attelage de remorque selon la revendication 17, caractérisé en ce que le goujon déplaçable (3, 13) est disposé à l'intérieur de la barre à boule et en ce que les deux éléments mobiles sont des goujons (20, 22).

19. Dispositif d'attelage de remorque selon l'une quelconque des revendications 1 à 18, caractérisé en ce que le deuxième moyen d'accouplement comporte un logement et en ce que la barre à boule comporte une partie présentant une section transversale ronde et une portion d'extrémité aplatie sur une largeur telle que la partie d'extrémité puisse être reçue à l'intérieur du logement.

20. Procédé de fabrication d'un dispositif d'attelage de remorque détachable pour un véhicule, présentant une barre à boule présentant un premier moyen d'accouplement et un deuxième moyen d'accouplement comportant un logement et configuré de manière à être monté sur le véhicule, et les deux moyens d'accouplement peuvent être amenés dans une position reliée dans laquelle ils sont reliés l'un à l'autre de manière détachable, dans lequel le premier moyen d'accouplement comporte un corps de serrage (1, 12) et des cames, le corps de serrage (1, 12) reposant contre le logement sur un point de contact ou un contact linéaire (K7) dans ladite position reliée, de sorte que les cames sont repoussées contre les surfaces de butée du logement aux points de contact ou contacts linéaires (K1, K2, K3, K4, K5, K6) dans ladite position reliée, caractérisé en ce que les cames définissent six desdits points de contact ou contacts linéaires (K1, K2, K3, K4, K5, K6, K7), en ce que les deux moyens d'accouplement sont en contact l'un avec l'autre en sept points de contact ou contacts linéaires (K1, K2, K3, K4, K5, K6, K7) dans ladite position reliée, de sorte que l'on obtient une liaison hyperstatique entre les deux moyens d'accouplement, en ce que le logement comporte deux parois ou surfaces latérales présentant des fentes formant les surfaces de butée pour les cames, et en ce qu'une plaque d'acier est réalisée par estampage, dotée de fentes par poinçonnage et coudée de manière à former les deux parois ou surfaces latérales du logement.

21. Procédé selon la revendication 20, caractérisé en ce que l'estampage de la plaque d'acier est un estampage fin.

22. Procédé selon la revendication 20 ou 21, caractérisé en ce que le premier moyen de serrage comporte un goujon cylindrique (13) déplaçable axialement par rapport à la barre à boule et une crémaillère (18), en ce que le corps de serrage (12) est placé dans un moule de moulage par injection et en ce que le goujon (13) et la crémaillère (18) sont alors formés en moulant un alliage métallique ou un plastique sur le corps de serrage (12) situé à l'intérieur du moule.

23. Procédé selon la revendication 22, caractérisé en ce que le corps de serrage (12) est réalisé par une opération de moulage de métal par injection (MIM).

24. Procédé selon la revendication 23, caractérisé en ce qu'un mélange d'une poudre métallique et d'un plastique est formé pour l'opération de moulage de métal par injection (MIM), en ce que le mélange est injecté dans un moule de manière à former un premier produit intermédiaire, en ce que le plastique est enlevé de manière à former un deuxième produit intermédiaire, poreux, et en ce que ce dernier est fritté de manière à former le corps de serrage (12).
